(19) Europäisches Patentamt

European Patent Office

Office européen des brevets

(11) **EP 1 117 717 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(21) Anmeldenummer: **99948853.9**

(22) Anmeldetag: **24.09.1999**

(51) Int Cl.7: **C08G 18/38**

(86) Internationale Anmeldenummer:
**PCT/EP99/07114**

(87) Internationale Veröffentlichungsnummer:
**WO 00/020479 (13.04.2000 Gazette 2000/15)**

(54) **AMINOFUNKTIONELLE HARNSTOFF-ALKOXY-SILANE, EIN VERFAHREN ZU IHRER HERSTELLUNG UND IHRE VERWENDUNG**

AMINO-FUNCTIONAL UREA-ALKOXY-SILANES, A METHOD FOR THE PRODUCTION THEREOF AND THEIR USE

UREE-ALCOXY-SILANES AMINO-FONCTIONNELLES, PROCEDE PERMETTANT DE LES PREPARER ET LEUR UTILISATION

(84) Benannte Vertragsstaaten:
**AT BE CH CY DE DK ES FI FR GB GR IE IT LI LU MC NL PT SE**

(30) Priorität: **07.10.1998 DE 19846099**

(43) Veröffentlichungstag der Anmeldung:
**25.07.2001 Patentblatt 2001/30**

(73) Patentinhaber:
• **Bayer Aktiengesellschaft**
**51368 Leverkusen (DE)**
• **BAYER ANTWERPEN N.V.**
**2040 Antwerpen (BE)**

(72) Erfinder:
• **AUDENAERT, Raymond**
**B-9220 Hamme (BE)**

• **SIMON, Joachim**
**D-40589 Düsseldorf (DE)**
• **JOACHIMI, Detlev**
**D-47800 Krefeld (DE)**
• **KARBACH, Alexander**
**D-47800 Krefeld (DE)**

(74) Vertreter: **Feldhues, Michael L.F., Dr.**
**Bayer Aktiengesellschaft,**
**Konzernbereich RP,**
**Patente und Lizenzen**
**51368 Leverkusen (DE)**

(56) Entgegenhaltungen:
**AU-A- 2 711 377     US-A- 4 645 816**
**US-A- 4 963 310**

## Beschreibung

Die vorliegende Erfindung betrifft wasserlösliche, oligomere und polymere Alkoxysilan-Verbindungen, die sowohl Harnstoffgruppen als auch Aminogruppen besitzen, ein Verfahren zu ihrer Herstellung und ihre Verwendung zur Oberflächenmodifizierung von Feststoffen, insbesondere zur Haftvermittlung auf Glasoberflächen und zur Beschlichtung von Glasfasern.

Die Verwendung von fünktionellen Mono-, Bis- und Tris-Alkoxysilanen zur Haftvermittlung und Modifikation von hydroxyfunktionellen Oberflächen, speziell Glasoberflächen, ist bekannt (Kirk-Othmer, Encyclopedia of Chemical Technology, Vol. 20, 3rd Ed., J. Wiley, N.Y.). Dabei wird allgemein die Vorstellung vertreten, die Haftvermittlung entstehe durch eine Hydrolyse der Alkoxysilangruppen zu Silanolgruppen und durch Kondensation mit Hydroxylgruppen der Oberfläche (E. Pluedemann, Silane Coupling Agents, Plenum Press, N.Y. 1982).

Vorzugsweise werden Alkoxysilane eingesetzt, die eine zusätzliche funktionelle Gruppe besitzen, die in der Lage ist, weitere spezifische oder unspezifische Bindungen einzugehen. Z.B. werden Alkoxysilane mit Methacryl-, Acryl-, Vinyl-, Amino- oder Harnstoffgruppen eingesetzt. Besonders bevorzugt werden funktionelle Alkoxysilane eingesetzt, die in der Lage sind, über die Reaktion der Aminogruppe z.B. mit Epoxiden, Carbonsäuren, Isocyanaten, Carbonsäureanhydriden etc. weitere kovalente Bindungen einzugehen. Diese kovalenten Bindungen tragen im besonderen Maße zur Haftvermittlung und Ankopplung an Glasoberflächen bei. Beispiele hierfür sind im besonderen Amino-alkoxysilane und Aminoalkyl-amino-alkoxysilane (US 2 971 864, US 3 234 159).

Aminosilane, z.B. 3-Aminopropyltrialkoxysilan und N-Aminoethyl-3-Aminopropyltrialkoxysilan sind Handelsprodukte z.B. von Hüls AG, Marl.

Die Fähigkeit zur Haftvermittlung ist offenbar besonders gut, wenn oligomere oder polymere Alkoxysilane eingesetzt werden, die pro Molekül mehr als eine Alkoxysilangruppe und zusätzlich weitere reaktive funktionelle Gruppen besitzen. Beispiele hierfür sind z.B. Amino-Amido-funktionelle Polymere oder Oligomere mit seitenständigen Alkoxysilangruppen (US 3 445 441, US 3 746 738, US 4 1263 073) oder Polyester mit Alkoxysilan-Seitengruppen (EP 43 109). Als vorteilhaft für die Applikation aus wäßrigen Lösungen werden diese Materialien in US 4 244 844 dargestellt. Diese Produkte weisen jedoch für technische Anwendungen unerwünschte gelbe bis braune Färbungen auf.

In US 4 163 073 und EP 43 109 werden Polyester mit Aminogruppen und Alkoxysilangruppen, die an der Hauptkette von ungesättigten Polyestern angebunden sind, beschrieben.

Weiterhin ist bekannt, daß Harnstoffgruppen enthaltende Alkoxysilane vorteilhaft für die Haftvermittlung an Glasoberflächen sind (Progr. Colloid Polym. Sci. 1997, 105: 80-84).

In FR 2 678 936 werden Polyharnstoff-Polyurethan-Makromere mit Alkoxysilan-Endgruppen beschrieben. Diese Verbindungen enthalten mehr als eine Alkoxysilangruppe pro Molekül und keine freien Aminogruppen.

Aus US 4 374 237 gehen Polyurethan-Prepolymere mit bisfunktionellen Alkoxysilan-End-Gruppen hervor. Diese Verbindungen enthalten endständige Alkoxysilangruppen, sowie Harnstoffgruppen und keine freien Aminogruppen.

3-Ureidopropyl-trialkoxysilane sind z.B. Handelsprodukte der Hüls AG, Marl. Die Herstellung und Verwendung von Ureido-Silanen wird in US 4 626 560, US 3 754 971 und US 4 046 794 beschrieben und ihre Verwendung in WO 94/13473. Diese Silane sind bezüglich der Alkoxysilangruppen als monofunktionelle Verbindungen zu betrachten und besitzen eine Alkoxysilangruppe mit maximal drei hydrolysierbaren Alkoxygruppen oder drei Hydroxygruppen pro Molekül. Derartige Silane besitzen schlechtere Eigenschaften als solche Haftvermittler, die mehr als nur eine Alkoxysilan-Gruppe pro Molekül besitzen.

In US 3 493 461 werden Ureido-Silane aus Mono-Isocyanat-funktionellen Alkoxysilanen durch Reaktion mit Aminen hergestellt. Gemäß EP 406 160 werden Harnstoff-Alkoxysilan-Verbindungen aus Mono-, Bis-, Tris- und höherfunktionellen Isocyanaten mit Aminoalkoxysilanen hergestellt. Aus WO 94/09013 gehen UV-härtbare bzw. polymerisierbare Oligomere mit endständigen Harnstoffgruppen, die durch Alkoxysilangruppen funktionalisiert sind, hervor. Die Haftfestigkeit dieser Verbindungen ist durch den Mangel an freien Aminogruppen sehr stark eingeschränkt.

Zum Zwecke der Haftvermittlung haben sich oligomere und polymere Alkoxysilan-Verbindungen, die aus Wasser applizierbar sind, als vorteilhaft erwiesen. Gleichzeitig aktiviert das Wasser die Alkoxysilanverbindungen, indem die Hydrolyse zu den reaktiven Silanolgruppen eingeleitet wird.

Eine besondere Bedeutung kommt daher bei Aminoalkoxysilanen den Derivaten zu, die wasserlöslich sind oder aus wässriger Phase appliziert werden können. Diese Derivate spielen eine besondere Rolle bei der Beschichtung von Glasfasern oder der Formulierung von Haftvermittlern auf wässriger Basis.

Alkoxysilan-Verbindungen mit Harnstoffgruppen, die zum Zwecke der Mischbarkeit mit feuchtigkeitshärtenden PU-Systemen entwickelt wurden und deren Aminogruppen durch Imino- oder Aminalgruppen weiter abreagiert wurden, so dass keine reaktiven Aminogruppen vorhanden sind, werden in EP 406 160 beschrieben. Die Haftvermittlung dieser Verbindungen ist dadurch eingeschränkt.

Aufgabe war es daher, geeignete, farblose, oligomere oder polymere Haftvermittler für oxidische Oberflächen zur Verfügung zu stellen und zu produzieren, die aus wäßrigen Lösungsmitteln appliziert werden können.

Überraschenderweise wurde gefunden, daß die Reaktion von Diamino-alkoxysilanen, wie z.B. N-Aminoethyl-3-Aminopropyltrialkoxysilan, mit Diisocyanaten zu unvernetzten, löslichen, linearen Harnstoff-Oligomeren und -Polymeren mit freien endständigen Aminogruppen und seitenständigen Alkoxysilangruppen führt, die in organischer Lösung lagerstabil sind, und die in wäßrigen Lösungsmitteln stabile Lösungen ergeben. Insbesondere die Kombination von freien Aminogruppen, Harnstoffgruppen und mehr als einer Alkoxysilangruppe pro Molekül führt dabei zu herausragenden Eigenschaften.

Gegenstand der Erfindung sind wasserlösliche, oligomere oder polymere aminofunktionelle Harnstoff-Alkoxy-Silanverbindungen erhältlich durch Reaktion von

a) 1 bis 1,8 Äquivalenten eines Diisocyanates mit

b) 2 Äquivalenten eines Diamins bestehend aus

b1) 80 bis 100 Gew.-% eines Diaminoalkoxysilans der Formel (1)

$$HN(R^1)\text{-}Z\text{-}N(H)\text{-}Y\text{-}Si(OR^2)_{(3-a)}R^3_a \tag{I}$$

wobei

Z = $C_1$-$C_6$-Alkylen, $C_5$-$C_{10}$-Cycloalkylen oder Arylen,

$R^1$ = H, $C_1$-$C_6$-Alkyl oder $C_5$-$C_{10}$-Cycloalkyl,

Y = $C_3$-$C_6$-Alkylen,

$R^2$ = $C_1$-$C_6$-Alkyl oder $C_5$-$C_{10}$-Cycloalkyl,

a = 0 bis 2 und

$R^3$ = $C_1$-$C_6$-Alkyl oder $C_5$-$C_{10}$-Cycloalkyl bedeuten, und

b2) 0 bis 20 Gew.-% mindestens einer nichtionischen, hydrophilen Verbindung enthaltend Ethergruppen, die pro Molekül zwei gegenüber Isocyanatgruppen reaktionsfähige Gruppen, insbesondere Hydroxylund/oder Aminogruppen, aufweist.

Als Diisocyanate eignen sich bevorzugt aromatische, aliphatische, heterocyclische, monocyclische und polycyclische, bifunktionelle Isocyanatverbindungen.

Als Diisocyanate können vorzugsweise Diisocyanate der Formel (II)

$$OCN\text{-}R\text{-}NCO \tag{II}$$

wobei

R = $C_1$-$C_6$-Alkylen, $C_5$-$C_{15}$-Cycloalkylen, $C_6$-$C_{14}$-Arylen, $C_7$-$C_{20}$-Arylalkylen oder $C_7$-$C_{20}$-Alkylarylen

bedeutet.

Diisocyanate des Typs Ethylendiisocyanat, 1,2 Diisocyanato-propan, 1,3 Diisocyanato-propan, 1,4 Butylendiisocyanat (BDI), 1,6 Diisocyanatohexan (HDI), 1,2 Diisocyanatocyclohexan, 1,3 Diisocyanatocyclohexan, 1,4 Diisocyanatobenzol, Bis(4-isocyanatocyclohexyl)methan (H12MDI), Bis(4-isocyanatocyclohexenyl)methan, Bis(4-isocyanatophenyl)methan (MDI), 2,4 und 2,6 Toluoldiisocyanat (TDI), 1,5 Diisocyanatonaphthalin, hydriertes Toluoldiisocyanat, 1-Isocyanatomcthyl-5-isocyanato-1,3,3,trimethyl-cyclohexane (Isophorondiisocyanat, IPDI), 1,6-Diisocyanato-2,2,4-trimethylhexan sind bevorzugt.

Besonders bevorzugt sind 1,6-Diisocyanatohexan und 1-Isocyanatomethyl-5-isocyanato-1,3,3-trimethylcyclohexan (Isophorondiisocyanat).

Weiterhin können vorzugsweise im Mittel bis-funktionelle Isocyanate, die durch Umsetzung oder Oligomerisierung von Diisocyanaten hergestellt wurden, eingesetzt werden. So können beispielsweise bevorzugt Allophanat-, Uretdion- oder Biuretgruppenhaltige Produkte (wie z.B. Desmodur® N 100 von Bayer AG, Leverkusen) oder partiell trimerisierte Polyisocyanate, welche Iminooxadiazindion- oder Isocyanurat-Ringe aufweisen (wie z.B. Desmodur® N 3400 von Bayer AG) eingesetzt werden.

Besonders geeignete Diaminoalkoxysilane sind N-β-(aminoethyl)-γ-aminopropyltrimethoxysilan (Dynasilan® Damo von Hüls AG), N-β-(aminoethyl)-y-aminopropyltriethoxysilan, N-β-(aminoethyl)-γ-aminopropylmethyldimethoxysilan, N-β-(aminoethyl)-N-β-(aminoethyl)-γ-aminopropyltrimethoxysilan:

$$(CH_3\text{-}CH_2\text{-}O)_3Si\text{-}CH_2\text{-}CH_2\text{-}CH_2\text{-}NH\text{-}CH_2\text{-}CH_2\text{-}NH_2$$

$$(CH_3O)_3Si\text{-}CH_2CH_2CH_2\text{-}NH\text{-}CH_2CH_2\text{-}NH_2$$

$$(C_2H_5O)_2(CH_3)Si\text{-}CH_2CH_2CH_2\text{-}(NH\text{-}CH_2CH_2)_3\text{-}NHCH_2CH_2CH_2\text{-}$$

$$Si(CH_3)(OC_2H_5)_2$$

$$(CH_3O)_3Si\text{-}CH_2CH_2CH_2\text{-}NH\text{-}CH_2\text{-}C_6H_4\text{-}NH\text{-}H_2CH_2\text{-}Si(OCH_3)_3$$

$$(CH_3O)_2(CH_3)\text{-}Si\text{-}CH_2CH_2CH_2\text{-}NH\text{-}CH_2CH_2\text{-}NH\text{-}CH_2CH_2CH_2\text{-}Si(CH_3)(OCH_3)_2$$

Besonders bevorzugt ist N-β-(aminoethyl)-y-aminopropyltrimethoxysilan.

Als Verbindungen unter b2) eignen sich besonders gut Verbindungen folgender Formel:

$$NH_2\text{-}(X\text{-}O\text{-})_a\text{-}V\text{-}NH_2$$

wobei

X $\quad$ $C_1$-$C_6$-Alkylen, verzweigt oder unverzweigt,
a $\quad$ 1 bis 100 und
V $\quad$ $C_1$-$C_6$-Alkylen, verzweigt oder unverzweigt, bedeuten.

Die Polyetherketten dieser Verbindungen bestehen bevorzugt zumindest zu 80 Gew.-%, besonders bevorzugt 100 Gew.-%, aus Ethylenoxideinheiten, wobei neben diesen auch Propylenoxideinheiten vorliegen können. Bevorzugte nichtionische, hydrophile Verbindungen sind beispielsweise Polyethylenglykole mit Molekulargewichten von 300 bis 6 000 (z.B. Carbowax®300, 400, 1 000, 1 500, 2 000, 6 000 von Union Carbide), difunktionelle Etherdiamine, wie z.B. 4,7-Dioxadecan-1,10-diamin, 4,9-Dioxadodecan-1,12-diamin, 4,7,10-Trioxadecan-1,13-diamin, Bis-(3-aminopropyl)-polytetrahydrofuran, Bis-(3-aminopropyl)-polytetrahydrofuran, Bis-(3-aminopropyl)-polytetrahydrofuran (Produkte Carbowax® 750, 1 100, 2 100 von BASF)sowie Polyetheramine (z.B. Jeffamine® D 230, D 400, D 2 000, XTJ 510 (D 4 000), ED 600, ED 900, ED 2 003, ED 4 000, EDR 148 (XTJ 504) von Texaco Chemical Company).

Ganz besonders bevorzugt sind folgende difunktionelle Etherdiamine: 4,7-Dioxadecan-1,10-diamin; 4,9-Dioxadodecan-1,12-diamin; 4,7,10-Trioxadecan-1,13-diamin; Bis-(3-aminopropyl)-polytetrahydrofuran 750, Bis-(3-aminopropyl)-polytetrahydrofuran 1 100, Bis-(3-aminopropyl)-polytetrahydrofuran 2 100 von BASF und Jeffamine® D 230, D 400, D 2 000, XTJ 510 (D 4 000), ED 600, ED 900, ED 2 003, ED 4 000, EDR 148 (XTJ504) von Texaco Chemical Company.

Die erfindungsgemäßen Substanzen ergeben überraschenderweise durch ihren Aufbau aus freien Amino- und Harnstoffgruppen eine wesentlich verbesserte Haftfestigkeit, insbesondere auf oxidischen Oberflächen und Glasoberflächen. Die auf den Oberflächen entstehenden Filme zeichnen sich durch eine hohe Festigkeit, Kratzfestigkeit und Transparenz, eine hohe Lösungsmittelbeständigkeit und eine gute Mischbarkeit mit niedermolekularen funktionellen Alkoxysilanen, wie z.B. 3-Aminopropyltrialkoxysilanen, aus und eignen sich sehr gut als Bindemittel für Glasfaserschlichten.

Ein weiterer Gegenstand der Erfindung ist ein Verfahren zur Herstellung der erfindungsgemäßen wasserlöslichen, oligomeren oder polymeren, aminofunktionellen Harnstoff-Alkoxy-Silanverbindungen, welches dadurch gekennzeichnet ist, daß man die Komponenten a), b1) und gegebenenfalls b2), die oben bereits beschrieben wurden, in einem organischen Lösungsmittel, in dem das Reaktionsprodukt löslich ist, gegebenenfalls unter Zusatz von Katalysatoren und/oder weiteren Zusatzstoffen, bei Temperaturen von -20°C bis 100°C, bevorzugt von 0°C bis 60°C, besonders bevorzugt von 0°C bis 40°C, zur Reaktion bringt und anschließend abkühlt.

Bevorzugt sind Katalysatoren wie z.B. tertiäre Amine (z.B. Triethylamin), Zinnverbindungen (z.B.Zinn-II-octoat, Dibutylzinnoxid, Dibutylzinndilaurat) und andere für die Umsetzung von Isocyanaten gebräuchliche Katalysatoren, wie sie z.B. in Becker/Braun, Kunststoff-Handbuch, Bd. 7, Polyurethane, 1983 Hanser, München beschrieben sind. Geeignete Katalysatoren sind auch in Adv. Ureth. Sci. Techn. 12, 1993, 59-85 und in J. prakt. Chem., 336, 1994, 185-200 beschrieben.

Als Lösungsmittel werden vorzugsweise N-Methylpyrrolidon, Diethylenglykoldimethylether, Methylethylketon, Methylisobutylketon, Aceton, Butylacetat, Methoxypropylacetat, Methanol, Ethanol, Propanol, Isopropanol, Butanol, Isobutanol, Hexanol, Octanol, Methoxypropanol, Methyldiglykol, Ethyldiglykol, Butyldiglykol oder Gemische dieser Lösungsmittel eingesetzt. Besonders bevorzugt sind Methanol, Ethanol, Propanol, Isopropanol und Aceton.

Für den Fachmann war es überraschend, wasserlösliche, oligomere oder polymere aminofunktionelle Harnstoff-Alkoxy-Silanverbindungen zu erhalten, da allgemein bekannt ist, daß die Reaktion von Diaminen mit Diisocyanaten zu höhermolekularen Oligo- und Polyharnstoffverbindungen führt, die jedoch aufgrund ihrer veränderten Löslichkeit und durch Vernetzung direkt während der Reaktion aus den verwendeten Lösungsmitteln ausfallen.

Ein weiterer Gegenstand der Erfindung sind Schlichtemittel für Glasfaser, die dadurch gekennzeichnet sind, daß sie neben den üblichen Bestandteilen einer Schlichte die erfindungsgemäßen wasserlöslichen, oligomeren oder polymeren, aminofunktionellen Harnstoff-Alkoxy-Silanverbindungen als Haftvermittler enthalten.

Die erfindungsgemäßen Verbindungen können, wie bereits oben beschrieben, nicht nur als Haftvermittler in Glasfaserschlichten verwendet werden, sondern auch auf Glasoberflächen appliziert werden, zur Oberflächenmodifizierung von oxidischen Feststoffen eingesetzt werden, als Bindemittel für Glas-, Mineral- und Holzpartikel verwendet werden, zur Herstellung von Antireflexionsschichten dienen und als Lacke oder Lackbestandteile Verwendung finden.

Die Erfindung soll anhand der nachfolgenden Beispiele näher erläutert werden.

### Beispiele

Die in den Versuchen verwendeten Isocyanate waren 1,6-Diisocyanatohexan (HDI) und Isocyanatomethyl-5-isocyanato-1,3,3-trimethylcyclohexan (Isophorondiisocyanat, IPDI) sowie Desmodur® N3300, Desmodur® N3400 und Desmodur® N3200 von Bayer AG. Als Aminokomponente b1) wurde N-ß-(aminocthyl)-y-aminopropyltrimethoxysilan (A1120 von OSI-WITCO) und als Komponente b2) wurden D230, EDR 148, ED 600 von Texaco Chemical Company eingesetzt.

### Beispiel 1

Die Komponenten b1) und gegebenenfalls b2) wurden unter Kühlung in 200 Teilen des Lösungsmittels vorgelegt. Anschließend wurde die Komponente a) zugetropft und die Temperatur bei 10 bis 15°C gehalten. Es wurde gerührt, bis die Lösung bei der Prüfung z.B. mittels IR-Spektroskopie NCO-frei war.

| Beispiel 1 | Molverhältnis b):a) | Komponente a) | Gew.-anteil Komponente a) | Komponente b1) | Gew.-anteil Komponente b1) | Komponente b2) | Gew.-anteil Komponente b2) | Lösungs mittel | Löslichkeit |
|---|---|---|---|---|---|---|---|---|---|
| a | 2:1 | IPDI | 6,93 | A1120 | 13,8 | - | - | Aceton | + |
| b | 2:1,2 | HDI | 6,3 | A1120 | 13,8 | - | - | Aceton | + |
| c | 2:1,4 | HDI | 7,35 | A1120 | 13,8 | - | - | Aceton | + |
| d | 2:1,4 | HDI | 5,88 | A1120 | 11,1 | - | - | Ethanol | + |
| e | 2:1,2 | HDI | 5,88 | A1120 | 11,1 | - | - | Isopropanol | + |
| Vergleich 1 | | | | | | | | | |
| f | 2:1,4 | HDI | 5,88 | A1120 | 11,1 | - | - | Ethylacetat | - |
| g | 2:1,4 | HDI | 5,88 | A1120 | 11,1 | - | - | Toluol | - |
| h | 2:1.4 | HDI | 5,88 | A1120 | 11,1 | - | - | Xylol | - |

Die Spalte "Löslichkeit" gibt an, ob sich das Produkt während und nach der Reaktion löst (+) oder ob das Produkt während oder nach der Reaktion ausfällt (-).

**Beispiel 2**

Die Komponenten b1) und gegebenenfalls b2) wurden unter Kühlung in 200 Teilen des Lösungsmittels vorgelegt. Anschließend wurde die Komponente a) zugetropft und die Temperatur bei 10 bis 15°C gehalten. Es wurde gerührt, bis die Lösung bei der Prüfung z.B. mittels IR-Spektroskopie NCO-frei war.

| Beispiel 2 | Molverhältnis b):a) | Komponente a) | Anteil Komponente a) | Komponente b1) | Anteil Komponente b1) | Komponente b2) | Anteil Komponente b2) | Lösungsmittel | Löslichkeit |
|---|---|---|---|---|---|---|---|---|---|
| a | 2:1 | HDI | 5,25 | A1120 | 13,8 | - | - | Methanol | + |
| b | 2:1 | HDI | 5,25 | A1120 | 13,8 | - | - | Methanol | + |
| c | 2:1,4 | HDI | 7,35 | A1120 | 13,8 | - | - | Methanol | + |
| d | 2:1,5 | HDI | 7,9 | A1120 | 13,8 | - | - | Methanol | + |
| e | 2:1,7 | HDI | 8,9 | A1120 | 13,8 | - | - | Methanol | + |
| f | 2:1,5 | IPDI | 10,40 | A1120 | 13,8 | - | - | Methanol | + |
| Vergleich 2 | | | | | | | | | |
| g | 2:1,5 | N3200 | 9,7 | A1120 | 13,8 | - | - | Methanol | - |
| h | 2:1,3 | N3300 | 13,8 | A1120 | 13,8 | - | - | Methanol | - |

Die Spalte "Löslichkeit" gibt an, ob sich das Produkt während und nach der Reaktion löst (+) oder ob das Produkt während oder nach der Reaktion ausfällt (-).

**Vergleichsbeispiel 3**

Die Komponente b1) wurde unter Kühlung in 200 Teilen des Lösungsmittels vorgelegt. Anschließend wurde die Komponente a) zugetropft und die Temperatur bei 10 bis 15°C gehalten. Es wurde gerührt, bis die Lösung bei der Prüfung z.B. mittels IR-Spektroskopie NCO-frei war.

| Vergleichsbeispiel 3 | Molverhältnis | Komponente a) | Anteil Komponente a) | Komponente b1) | Anteil Komponente b1) | Komponente b2) | Anteil Komponente b2) | Lösungsmittel | Löslichkeit |
|---|---|---|---|---|---|---|---|---|---|
| a | 2:1,4 | HDI | 5,88 | Ethylendiamin | 3,0 | - | - | Methanol | - |
| b | 2:1,4 | HDI | 5,88 | Ethylendiamin | 3,0 | - | - | Ethanol | - |
| c | 2:1,4 | HDI | 5,88 | Ethylendiamin | 3,0 | - | - | Toluol | - |
| d | 2:1,4 | HDI | 5,88 | Hexamethylendiamin | 5,81 | - | - | Methanol | - |
| e | 2:1,4 | HDI | 5,88 | Hexamethylendiamin | 5,81 | - | - | Ethanol | - |
| f | 2:1,4 | HDI | 5,88 | Hexamethylendiamin | 5,81 | - | - | Toluol | - |
| g | 2:1,4 | HDI | 5,88 | Amin L* | 3,62 | - | - | Methanol | - |
| h | 2:1,4 | HDI | 5,88 | Amin L* | 3,62 | - | - | Ethanol | - |

*Amin L = N,N-Bis(3-aminopropyl)methylamin

Die Spalte "Löslichkeit" gibt an, ob sich das Produkt während und nach der Reaktion löst (+) oder ob das Produkt während oder nach der Reaktion anfällt (-).

**Beispiel 4**

Die Komponenten b1) und gegebenenfalls b2) wurden unter Kühlung in 560 Teilen des Lösungsmittels vorgelegt. Anschließend wurde die Komponente a) zugetropft und die Temperatur bei 10 bis 15°C gehalten. Es wurde gerührt, bis die Lösung bei der Prüfung z.B. mittels IR-Spektroskopie NCO-frei war.

| Beispiel 4 | Molverhältnis | Komponente a) | Anteil Komponente a) | Komponente b1) | Anteil Komponente b1) | Komponente b2) | Anteil Komponente b2) | Lösungsmittel | Löslichkeit |
|---|---|---|---|---|---|---|---|---|---|
| a | 2:1,4 | HDI | 23,5 | A1120 | 43,7 | N-(2-Hydroxyethyl)-ethylendiamin | 0,325 | Methanol | + |
| b | 2:1,4 | HDI | 23,5 | A1120 | 43,01 | N-(2-Hydroxyethyl)-ethylendiamin | 0,65 | Methanol | + |
| c | 2:1,4 | HDI | 23,5 | A1120 | 41,62 | N-(2-Hydroxyethyl)-ethylendiamin | 1,3 | Methanol | + |
| d | 2:1,6 | HDI | 26,88 | A1120 | 43,7 | D230 | 0,73 | Methanol | + |
| e | 2:1,6 | HDI | 26,88 | A1120 | 43,7 | EDR 148 | 0,46 | Methanol | + |
| f | 2:1,4 | HDI | 23,5 | A1120 | 43,7 | EDR 148 | 0,46 | Methanol | + |
| g | 2:1,4 | HDI | 23,5 | A1120 | 43,7 | EDR 148 | 0,92 | Methanol | + |
| h | 2:1,4 | HDI | 23,5 | A1120 | 41,62 | EDR 148 | 1,85 | Methanol | + |
| j | 2:1,4 | HDI | 23,5 | A1120 | 38,85 | EDR 148 | 3,70 | Methanol | + |
| k | 2:1,8 | HDI | 30,24 | A1120 | 43,7 | ED600 | 1,95 | Methanol | + |
| l | 2:1,7 | HDI | 28,56 | A1120 | 43,7 | ED600 | 1,95 | Methanol | + |
| m | 2:1,6 | HDI | 26,88 | A1120 | 43,7 | ED600 | 1,95 | Methanol | + |
| n | 2:1,4 | HDI | 23,52 | A1120 | 43,7 | ED600 | 1,95 | Methanol | + |
| o | 2:1,4 | HDI | 23,52 | A1120 | 43,01 | ED600 | 3,91 | Methanol | + |
| p | 2:1,4 | HDI | 23,52 | A1120 | 41,62 | ED600 | 7,83 | Methanol | + |
| q | 2:1,4 | HDI | 23,52 | A1120 | 38,85 | ED600 | 15,67 | Methanol | + |

Die Spalte "Löslichkeit" gibt an, ob sich das Produkt während und nach der Reaktion löst (+) oder ob das Produkt während oder nach der Reaktion ausfällt (-).

Die erfindungsgemäßen Produkte bleiben während der Reaktion in Lösung (entspricht Löslichkeit = + in den Tabellen) und sind aus den in der Synthese verwendeten Lösungsmitteln oder nach Lösungsmittelaustausch aus geeigneten Lösungsmitteln die eventuell Wasser enthalten, applizierbar. Vergleichsprodukte, die zeigen, daß nicht alle beliebigen Diaminoderivate zu den erfindungsgemäßen Produkten führen, sind in Beispiel 3 aufgeführt. Diese ergaben bei der Beurteilung ein eindeutiges Minus ("-") bei der Löslichkeit (siehe Tabelle).

### Beispiel 5

Die Herstellung der Glasfasern erfolgte, wie sie z.B. in K.L. Loewenstein, "The Manufacturing Technology of Continuous Class Fibres", Elsevier Scientific Publishing Corp., Amsterdam, London, New York, 1983, beschrieben ist.

Die Schlichte bestand aus folgenden Komponenten und wurde über einen Kiss-Rollapplikator auf Glasfaser - mit einem Durchmesser von 11 μm - aufgebracht. Die Glasfasern wurden anschließend bei 135°C getrocknet.

| Schlichtekomponenten; Mengenangaben in (Gew.-%) | Beispiel 5.1 (Vergleich) | Beispiel 5.2 | Beispiel 5.3 |
|---|---|---|---|
| 3-Aminopropyltriethoxysilan | 0,8 | 0,8 | 0,8 |
| Polyurethan-Dispersion (Baybond® PU 0401, Handelsprodukt der Fa. Bayer AG, Leverkusen | 4 | 4 | 4 |
| Gleitmittel (Polyalkylenglykol) | 0,3 | 0,3 | 0,3 |
| Aminofunktionelles Harnstoff-Alkoxysilan gemäß Beispiel 2 | - | 0,2 | - |
| Aminofunktionelles Harnstoff-Alkoxysilan gemäß Beispiel 4 | - | - | 0,25 |
| Wasser | auf 100 | auf 100 | auf 100 |

### Beispiel 6

Verwendung der erfindungsgemäßen, beschichteten Glasfasern

70 Gew.-Teile Polyamid 6 (Durethan® BKV 29, Fa. Bayer AG) und 30 Gew.-Teilc Glasfasern aus den Beispielen 5.1, 5.2 und 5.3 wurden auf einem Extruder bei einer Extrudertemperatur von 250°C zu einer Formmasse extrudiert und granuliert. Von den Formmassen wurden auf einer üblichen Spritzgußmaschine 80 x 10 x 4 mm-Prüfstäbe und Zugstäbe hergestellt. Geprüft wurden Biegefestigkeit nach DIN 53 452, Zugfestigkeit nach DIN 53 455 sowie die Schlagzähigkeit bei Raumtemperatur nach Izod (ISO 180/IC).

| | Zugfestigkeit (MPa) | Biegefestigkeit (MPa) | Schlagzähigkeit (kJ/m$^2$) |
|---|---|---|---|
| Glasfasern aus Beispiel 5.1 (Vergleich | 167 | 260 | 52 |
| Glasfasern aus Beispiel 5.2 | 181 | 276 | 60,4 |
| Glasfasern aus Beispiel 5.3 | 182 | 280 | 62,2 |

Die erfindungsgemäßen Substanzen in Schlichtemitteln auf Glasfasern appliziert ergeben glasfaserverstärkte Kunststoffe, die bezüglich Zug- und Biegefestigkeit und Schlagzähigkeit bessere Eigenschaften aufweisen als entsprechende Kunststoffe, die mit gängigen beschichteten Glasfasern verstärkt werden.

### Patentansprüche

1.   Wasserlösliche, oligomere oder polymere, aminofunktionelle Hamstoff-Alkoxy-Silanverbindungen erhältlich durch Reaktion von

      a) 1 bis 1,8 Äquivalenten eines Diisocyanates mit

b) 2 Äquivalenten eines Diamins bestehend aus

b1) 80 bis 100 Gew.-% eines Diaminoalkoxysilans der Formel (I)

$$HN(R^1)\text{-}Z\text{-}N(H)\text{-}Y\text{-}Si(OR^2)_{(3\text{-}a)}R^3{}_a \qquad (I)$$

wobei

Z = $C_1\text{-}C_6$-Alkylen, $C_5\text{-}C_{10}$-Cycloalkylen oder Arylen,

$R^1$ = H, $C_1\text{-}C_6$-Alkyl oder $C_5\text{-}C_{10}$-Cycloalkyl,

Y = $C_3\text{-}C_6$-Alkylen,

$R^2$ = $C_1\text{-}C_6$-Alkyl oder $C_5\text{-}C_{10}$-Cycloalkyl,

a= 0 bis 2 und

$R^3$ = $C_1\text{-}C_6$-Alkyl oder $C_5\text{-}C_{10}$-Cycloalkyl bedeuten, und

b2) 0 bis 20 Gew.-% mindestens einer nichtionischen, hydrophilen Verbindung, die Ethergruppen enthält, die pro Molekül zwei gegenüber Isocyanatgruppen reaktionsfähige Gruppen aufweist.

2. Verfahren zur Herstellung von Verbindungen gemäß Anspruch 1, **dadurch gekennzeichnet, dass** die Verbindungen a), b1) und gegebenenfalls b2) in einem organischen Lösungsmittel, in dem das Reaktionsprodukt löslich ist, gegebenenfalls unter Zugabe von Katalysatoren und/oder weiteren Zusatzstoffen bei Temperaturen zwischen -20°C und +100°C miteinander umgesetzt werden und anschließend abgekühlt wird.

3. Verwendung der Verbindungen gemäß Anspruch 1 zur Oberflächenmodifizierung von oxidischen Feststoffen, als Bindemittel für Glas-, Mineral- und Holzpartikel, zur Haftvermittlung auf Glasoberflächen, als Haftvermittler in Schlichtemitteln zur Beschlichtung von Glasfasern, zur Herstellung von Antireflexionsschichten und als Lacke oder Lackbestandteile.

**Claims**

1. Water-soluble oligomeric or polymeric aminofunctional urea alkoxysilane compounds obtainable by reacting

a) from 1 to 1.8 equivalents of a diisocyanate with

b) 2 equivalents of a diamine consisting of

b1) from 80 to 100 wt.% of a diamino alkoxysilane of the formula (I)

$$HN(R^1)\text{-}Z\text{-}N(H)\text{-}Y\text{-}Si(OR^2)_{(3\text{-}a)}R^3{}_a \qquad (I)$$

wherein

Z denotes $C_1\text{-}C_6$-alkylene, $C_5\text{-}C_{10}$-cycloalkylene or arylene,

$R^1$ denotes H, $C_1\text{-}C_6$-alkyl or $C_5\text{-}C_{10}$-cycloalkyl,

Y denotes $C_3\text{-}C_6$-alkylene,

$R^2$ denotes $C_1\text{-}C_6$-alkyl or $C_5\text{-}C_{10}$-cycloalkyl,

a     is from 0 to 2, and

$R^3$     denotes $C_1$-$C_6$-alkyl or $C_5$-$C_{10}$-cycloalkyl, and

b2) from 0 to 20 wt.% of at least one nonionic hydrophilic compound comprising ether groups and having per molecule two groups capable of reacting with isocyanate groups.

2. Process for the preparation of compounds according to Claim 1, **characterised in that** the compounds a), b1) and optionally b2) are reacted together in an organic solvent in which the reaction product is soluble, optionally with the addition of catalysts and/or further additives at temperatures of between -20°C and +100°C, followed by cooling.

3. Use of the compounds according to Claim 1 for surface modification of oxidic solids, as a binder for particles of glass, mineral and wood, for coupling on glass surfaces, as a coupling agent in sizes for sizing glass fibres, for the manufacture of anti-reflective coatings and as lacquers or lacquer components.

**Revendications**

1. Composés d'urée-alcoxysilanes aminofonctionnels, oligomères ou polymères, hydrosolubles, que l'on obtient par réaction de

a) de 1 à 1,8 équivalent d'un diisocyanate, avec

b) 2 équivalents d'une diamine constituée par

b1) à concurrence de 80 à 100 % en poids, un diaminoalcoxysilane répondant à la formule (I)

$$HN(R^1)\text{-}Z\text{-}N(H)\text{-}Y\text{-}Si(OR^2)_{(3\text{-}a)}R^3{}_a \hspace{2cm} (I)$$

dans laquelle

Z     représente un groupe alkylène en $C_1$-$C_6$, un groupe cycloalkylène en $C_5$-$C_{10}$ ou un groupe arylène,

$R^1$     représente un atome d'hydrogène, un groupe alkyle en $C_1$-$C_6$ ou un groupe cycloalkyle en $C_5$-$C_{10}$,

Y     représente un groupe alkylène en $C_3$-$C_6$,

$R^2$     représente un groupe alkyle en $C_1$-$C_6$ ou un groupe cycloalkyle en $C_5$-$C_{10}$,

a     représente un nombre de 0 à 2, et

$R^3$     représente un groupe alkyle en $C_1$-$C_6$ ou un groupe cycloalkyle en $C_5$-$C_{10}$, et

b2) à concurrence de 0 à 20 % en poids, au moins un composé hydrophile non ionique qui contient des groupes éthers, qui présente par molécule, deux groupes aptes à réagir vis-à-vis de groupes isocyanates.

2. Procédé pour la préparation de composés selon la revendication 1, **caractérisé en ce qu'**on fait réagir les uns avec les autres les composés a), b1) et le cas échéant b2) dans un solvant organique dans lequel le produit réactionnel est soluble, le cas échéant en ajoutant des catalyseurs et/ou des additifs supplémentaires, à des températures entre -20 °C et +100 °C, et ensuite on refroidit.

3. Utilisation des composés selon la revendication 1, pour la modification de la surface de substances solides oxydées, à titre de liant pour des particules de verre, des particules minérales et des particules de bois, pour conférer une adhérence à des surfaces en verre, à titre d'adhésif dans des agents d'encollage pour l'encollage de fibres de verre, pour la préparation de couches antireflet et à titre de laques, de vernis ou de peintures ou encore de constituants desdites laques, vernis ou peintures.